# EUROPÄISCHE PATENTSCHRIFT

(11) **EP 2 226 146 B1**
(45) Veröffentlichungstag und Bekanntmachung des Hinweises auf die Patenterteilung: **26.03.2014**
(21) Anmeldenummer: 10153577.1
(22) Anmeldetag: 15.02.2010
(51) Int. Cl.: B23K 9/02, B23K 9/028, B23K 9/095, B23K 9/12, B23K 101/00

(54) **Verfahren zum Verbinden zweier, insbesondere rotationssymmetrischer, Metallteile, mittels eines Wolfram-Inert-Gas (WIG)-Schweissverfahrens sowie Vorrichtung zur Durchführung des Verfahrens**
Method of joining two, preferably rotationally symmetric, metallic workpieces by tungsten inert gas (TIG) welding and apparatus for carrying out this method
Procédé d'assemblage de deux pièces métalliques, notamment symétriques de révolution, par soudage TIG et appareil pour la mise en oeuvre d'un tel procédé

(30) Priorität: 03.03.2009 CH 3202009
(43) Veröffentlichungstag der Anmeldung: 08.09.2010
(73) Patentinhaber: Alstom Technology Ltd, 5400 Baden (CH)
(72) Erfinder: Keller, Sorin, CH-5452, Oberrohrdorf (CH); Balbach, Werner, CH-5303, Würenlingen (CH)

(56) Entgegenhaltungen:
- EP-A1- 0 665 079
- EP-A1- 0 870 567
- GB-A- 2 142 859
- JP-A- 9 285 867
- JP-A- 59 073 181
- US-A- 4 532 406
- US-A- 4 617 444
- US-A1- 2006 201 915

## Beschreibung

### TECHNISCHES GEBIET

Die vorliegende Erfindung bezieht sich auf das Gebiet der Schweisstechnik. Sie betrifft ein Verfahren zum Verbinden zweier, insbesondere rotationssymmetrischer, Metallteile, mittels eines Wolfram-Inert-Gas(WIG)-Schweissverfahrens gemäss dem Oberbegriff des Anspruchs 1. Die vorliegende Erfindung bezieht sich weiterhin auf eine Vorrichtung zur Durchführung des Verfahrens. Ein solches Verfahren und eine solche Vorrichtung sind aus der Druckschrift US-A-4,617,444 bekannt.

### STAND DER TECHNIK

In der Druckschrift EP-A1-0 665 079 wird das WIG-Engspaltschweissen zum Verbinden von Materialien durch eine volumenarme Schweissnaht mit dem Schwerpunkt Nahtgeometrie beschrieben. Die Überwachung des Schweissprozesses ist dort nur direkt visuell üblich. Andere Anwender des WIG-Engspaltschweissens führen eine Schweissprozessüberwachung durch eine extern (ausserhalb des Brenners und ausserhalb des Engspaltes) einseitig montierte Videokamera durch. Dies bietet nur eine eingeschränkte Überwachungsmöglichkeit, was die Schweisstiefe beschränkt.

In der Druckschrift EP-A1-1 810 772 wird eine Schutzgaszuführung für das WIG-Engspaltschweissen beschrieben, mit einer reduzierten Schutzgasmenge in zwei Gasströmen, welche die Elektrode und das ganze Führungssystem schützen. Eine Überwachung in unmittelbarer Lichtbogennähe ist hier nur visuell möglich. Mit zunehmender Nahttiefe wird eine genaue Beurteilung der Nahtqualität deutlich eingeschränkt. Ein voll automatisierter Schweissprozess ist dort nicht beschrieben und unter diesen Umstanden wohl auch nicht realisierbar. Das Verfahren ist besonders gut anwendbar zum Verbinden rotationssymmetrischer Körper des Grossmaschinenbaus, wie z.B. Rotoren von Turbomaschinen. Auch die dickwandigen Bauteile, die nur von einer Seite zugänglich sind und daher wurzelseitig nicht auch geschweisst werden können, können mit dem oben beschriebenen Verfahren gut verbunden werden.

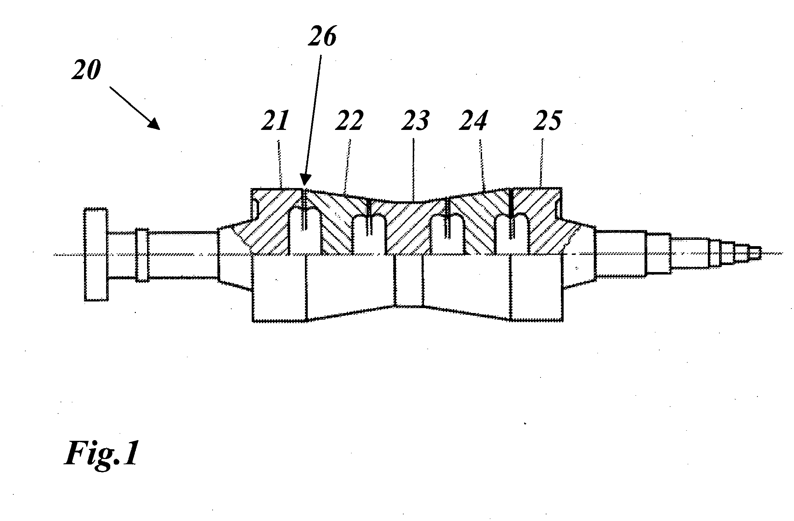

Ein bevorzugtes Anwendungsgebiet des Verfahrens ist die Verbindung von Scheiben und hohlzylinderförmigen Schmiedestücken, welche zum Bau von Rotoren für Dampf- und Gasturbinen, Verdichter sowie für Turbogeneratoren Verwendung finden. Ein solcher Rotor 20 ist in Fig. 1 dargestellt. Er ist zusammengesetzt aus mehreren Rotorscheiben 21,...,25, die untereinander durch Schweissnähte 26 stoffschlüssig verbunden sind.

Die zu verbindenden und einen Engspalt bildenden Werkstückteile können aber auch an ihrer Stossfuge durch eine mittels Elektronenstrahl-, Plasma-, Laserstrahl- oder Argonarc-Schweissverfahren erzeugte Grundnaht mit oder ohne Zusatzwerkstoff verschweisst werden. Nach der Grundnaht wird häufig der weitere Nahtaufbau mit Unterpulver-Schweissen vervollständigt. Das Verfahren ist besonders gut anwendbar zum Verbinden rotationssymmetrischer Körper des Grossmaschinenbaus. Auch dickwandige Bauteile, die nur von einer Seite zugänglich sind und daher wurzelseitig nicht nachgeschweisst werden können, können mit dem Verfahren nach der DE-A1-26 33 829 gut verbunden werden. Der Vorteil dieses Verfahrens besteht darin, dass ein einschlussfreies feinkörniges Gefüge an der Verbindungsstelle der Werkstückteile entsteht. Sowohl im Schweissgut als auch in der Wärmeeinflusszone ist kein Primärgefüge mehr vorhanden. Dadurch erübrigt sich eine nachträgliche Normalglühung oder Vergütung.

Diese Verfahren haben alle keine Automatisierung des Schweissprozesses und den Nachteil, dass sie die direkte Überwachung durch ein oder mehrere Videosysteme direkt in der Schweissdüse nicht aufweisen, und daher manuell überwacht werden müssen und keine Automatisierung für alle Anwendungen zulassen.

Die Druckschrift US-A1-2006/0201915 offenbart ein Schweißverfahren für Edelstahlrohre, das zwar auch eine optische Überwachung des Schweißprozesses mittels einer Kamera (35) vorsieht, jedoch ist diese Kamera außerhalb des Schweißspaltes montiert, so dass einerseits eine genaue Prozessführung über die Kamera nicht möglich ist, andererseits aber auch das Erfordernis einer Kühlung wegfällt.

Die Druckschrift EP-A1-0 665 079 beschreibt ein vollautomatisches WIG-Schweißverfahren zum Verbinden von Metallteilen über einen extremen Engspalt. Hierzu wird ausgeführt, dass, wenn der Lichtbogen einmal in Position gebracht worden ist, keine Veränderung mehr nötig sei, so dass der Schweißvorgang automatisch ablaufen könne (Spalte 4, Zeilen 21-24). Eine optische Überwachung und Steuerung gemäß Anmeldung ist in der D2 nicht angesprochen.

Die Druckschrift EP-A1-0 870 567 offenbart eine Vorrichtung zum Schweißen in einem Engspalt, bei der zwei optische Kameras (18, 20) zur Überwachung der Schweißzone eingesetzt sind (Spalte 7, Zeilen 41-45). Zur Kühlung der Wärme belasteten Teile einschließlich der Kameras ist Wasser vorgesehen (Spalte 7, Zeilen 23-28).

Die Druckschrift JP59073181 offenbart ein Verfahren zum Schweißen im Engspalt, bei dem das Bild um den Lichtbogen über eine optische Faser (8) in eine Fernsehkamera eingegeben wird. Wie aus Fig. 1 der D4 zu erkennen ist, ist die optische Faser klar außerhalb des Engspaltes angeordnet und benötigt daher keine spezielle Kühlung.

Die Druckschrift US-A-4,617,444 beschreibt einen Brenner für das WIG-Schweissen, der unter anderem ein Endoskop (26) zur Beobachtung der Schweissraupe vorsieht. Zur Kühlung des Brenners ist vor allem Wasser vorgesehen (Spalte 4, Zeile 4; Zeilen 34-41). Eine Kühlung der Optik durch Schutzgas ist nicht offenbart.

Die Druckschrift JP09285867 offenbart eine Vorrichtung zum TIG-Schweißen. Eine optische Überwachungsvorrichtung ist nicht vorgesehen.

### DARSTELLUNG DER ERFINDUNG

Es ist daher eine Aufgabe der Erfindung, ein Schweissverfahren zur Erzeugung volumenarmer Nähte höchster Qualität anzugeben, welches die Nachteile bekannter Verfahren vermeidet, und mit welchem auch komplizierte und voluminöse Werkstücke und insbesondere auch Werkstücke, die nur auf einer Seite für den Schweissprozess zugänglich sind, verbunden werden, um eine im Vergleich zum Stand der Technik höhere Wirtschaftlichkeit infolge vollautomatischem Schweissens zu erreichen. Es ist weiterhin eine Aufgabe, eine Vorrichtung zur Durchführung des Verfahrens anzugeben.

Die Aufgabe wird durch die Gesamtheit der Merkmale der Ansprüche 1 und 9 gelöst. Für das erfindungsgemässe Verfahren ist wesentlich, dass der Engspalt eine durchgehend konstante Breite aufweist, dass die Breite des Engspaltes so gewählt ist, dass sich die übereinander liegenden Schweissraupen jeweils über die gesamte Breite des Engspaltes erstrecken, und dass der ganze Engspalt vollautomatisch mit den Schweissraupen aufgefüllt wird. Vorzugsweise wird dazu ein Engspalt mit einer Breite verwendet, die kleiner als 10 mm ist und insbesondere 9,4 mm beträgt.

Eine Ausgestaltung des erfindungsgemässen Verfahrens ist dadurch gekennzeichnet, dass der Entlastungsbereich eine Breite und eine Höhe aufweist, und dass die Breite des Entlastungsbereiches ungefähr das 3-fache seiner Höhe beträgt.

Eine andere Ausgestaltung des erfindungsgemässen Verfahrens ist dadurch gekennzeichnet, dass der Engspalt eine Höhe aufweist, die das 2-fache seiner Breite, mindestens jedoch 12 mm, beträgt.

Gemäss einer weiteren Ausgestaltung wird für das WIG-Schweissverfahren ein Schweissdraht verwendet, dessen Durchmesser zwischen einem Zehntel und einem Fünftel der Breite des Engspaltes beträgt, mindestens jedoch 0,8 mm und höchstens 1,2 mm, sofern die zu verbindenden Metallteile aus einem typischen Rotorstahl bestehen.

Eine andere Ausgestaltung zeichnet sich dadurch aus, dass die Metallteile für das WIG-Schweissverfahren auf erhöhte Temperaturen, vorzugsweise oberhalb 200°C, vorgewärmt werden, und dass beim Schweissen in Abhängigkeit von der Vorwärmtemperatur mit Stromstärken im Bereich von 140 A bis 300 A bei einem Vorschub von 50 mm bis 200 mm pro Minute gearbeitet wird.

Gemäss einer weiteren Ausgestaltung des Verfahrens nach der Erfindung wird beim WIG-Schweissverfahren als Schutzgas Argon oder Argon mit maximal 3% Wasserstoff oder ein Argon-Helium-Gemisch mit 30-70%, vorzugsweise 50%, Argon, Rest Helium, oder eine Argon-Stickstoff-Wasserstoff-Gemisch, verwendet.

Eine wieder andere Ausgestaltung ist dadurch gekennzeichnet, dass die zu verbindenden Metallteile rotationssymmetrisch sind, dass die Metallteile während des Schweissens übereinander angeordnet und um eine vertikale Achse gedreht werden, und dass zum Schweissen ein Brennerschwert verwendet wird, welches in radialer und in vertikaler Richtung verfahrbar ausgebildet ist.

Die erfindungsgemässe Vorrichtung zur Durchführung des Verfahrens zeichnet sich aus durch ein automatisch positionierbares und arbeitendes, als Engspaltbrenner ausgebildetes Brennerschwert für das WIG-Schweissverfahren mit einem integrierten Videosystem zur Videoüberwachung der Schweissung, wobei das Brennerschwert eine keramische Flachdüse für die Schutzgaszufuhr aufweist, und das Videosystem derart in der keramischen Flachdüse untergebracht ist, dass das Schutzgas gleichzeitig zur Kühlung des Videosystems dient und dass das integrierte Videosystem zwei Videoeinheiten umfasst, zwischen denen die Wolframelektrode derart angeordnet ist, dass mit dem Videosystem die Wolframelektrode, der Lichtbogen, das Schmelzbad, die Schweissdrahtzufuhr und die Flankenbenetzung optisch überwacht werden kann. Mit dem integrierten Videosystem ist in dem Engspalt eine automatische Schweissung möglich.

Mit Vorteil ist dabei zur automatischen Schweissdrahtzufuhr ein Drahtführungssystem in das Brennerschwert integriert.

Eine andere Ausgestaltung der erfindungsgemässen Vorrichtung ist dadurch gekennzeichnet, dass die keramische Flachdüse für einen minimalen Schutzgasverbrauch von etwa 8 l/min optimiert ist.

Für den automatischen Betrieb ist es weiterhin von Vorteil, wenn im Brennerschwert Mittel zur Bestimmung der Position des Brennerschwertes im Engspalt angeordnet sind. Vorzugsweise umfassen die Mittel zur Bestimmung der Position des Brennerschwertes ein integriertes kapazitives und/oder Laser-Messsystem umfassen.

Eine andere Ausgestaltung der erfindungsgemässen Vorrichtung zeichnet sich dadurch aus, dass die zu verbindenden Metallteile um eine vertikale Achse drehbar sind, und dass das Brennerschwert in vertikaler und in radialer Richtung automatisch verfahrbar ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer teilweise geschnittenen Seitenansicht einen aus mehreren Rotorscheiben zusammengeschweissten Rotor einer Turbomaschine, bei der das erfindungsgemässe Verfahren bevorzugt Anwendung findet;
- Fig. 2: eine stark vereinfachte Vorrichtung zum Schweissen zweier rotationssymmetrischer Metallteile gemäss einen Ausführungsbeispiel der Erfindung;
- Fig. 3: in zwei Teilfiguren das in einer Konfiguration gemäss Fig. 2 in einen Engspalt eingeführte Brennerschwert der Erfindung (Fig. 3a) n und einen vergrösserten Ausschnitt vom unteren Ende des Engspalts (Fig. 3b);
- Fig. 4: von der Seite gesehen ein auf einer Supportplatte montiertes Brennerschwert gemäss einem Ausführungsbeispiel der Erfindung; und
- Fig. 5: das Brennerschwert aus Fig. 4 in der Draufsicht von oben.

### WEGE ZUR AUSFÜHRUNG DER ERFINDUNG

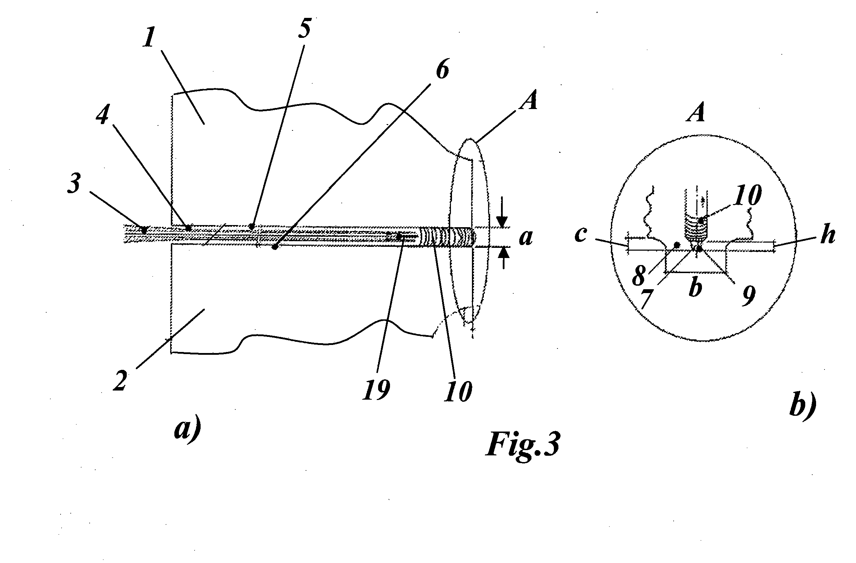

Beim vorliegenden Verfahren weisen gemäss Fig. 3 die zu verbindenden Metallteile 1 und 2 einen Engspalt 4 und einen Zentrierversatz 7 auf. Die beiden Metallteile 1 und 2 werden zunächst durch diesen Zentrierversatz 7 zueinander positioniert (Fig. 3b). Im Nahtgrundbereich ist ein Entlastungsbereich 8 derart ausgebildet, dass bei der Schweissung eine Solldurchschmelzstelle 9 entsteht und die durch den Engspalt gebildeten Werkstückflanken 5 und 6 (Fig. 3a) mittels des vollautomatischen Wolfram-Inert-Gas(WIG)-Schweissverfahrens durch mehrlagige Schweissraupen 10, welche sich jeweils über die gesamte Breite des Engspaltes 4 erstrecken, verbunden werden. Die Vorteile dieser Vorgehensweise sind unter anderem darin zu sehen, dass der Engspalt 4 vollautomatisch geschweisst werden kann und somit eine hohe Wirtschaftlichkeit des Verfahrens erzielt wird.

Es werden insbesondere Schweissnähte höchster Qualität erzeugt, so dass eine nachträgliche Wärmebehandlung der verbundenen Werkstücke 1, 2 nicht notwendig ist. Mit besonderem Vorteil können so Einzelteile miteinander verbunden werden, die nur von einer Seite aus für den Schweissprozess zugänglich sind. Dabei ist besonders zweckmässig, wenn ein Entlastungsbereich 8 mit einer Breite b verwendet wird, welche ca. das Dreifache seiner Höhe c beträgt (Fig. 3b). Dadurch wird gewährleistet, dass beim Schweissen entstehende Einbrandkerben beidseitig der Durchschmelzraupe und damit nur ausserhalb des tragenden Querschnitts entstehen. Ferner ist es vorteilhaft, wenn ein Engspalt 4 (8-12 mm breit) verwendet wird, dessen Höhe das Zweifache seiner Breite a, mindestens aber 12 mm, beträgt. Da mit zunehmender Schweissnahtbreite die Wärmeeinbringung immer grösser wird, ist es nur bei diesen Abmassen möglich, auch die letzte Schweissraupe 10 in nur einer Lage zu schweissen, so dass eine volle Automatisierung des Verfahrens ermöglicht wird.

Schliesslich wird mit Vorteil beim WIG-Schweissverfahren ein Schweissdraht verwendet, dessen Durchmesser ein Fünftel bis ein Zehntel der Breite a des Engspaltes 4, mindestens aber 0,8 mm und höchstens 1,2 mm bei den typischen Rotorstählen beträgt. Dadurch werden eine sichere Drahtführung und ein gutes Schweissergebnis erreicht. Ausserdem wird in vorteilhafter Weise beim WIG-Schweissverfahren in Abhängigkeit von der Vorwärmtemperatur, welche bei den typischen Rotorstählen vorzugsweise oberhalb von 200°C liegt, mit Stromstärken im Bereich von 140 bis 300 A bei einem Vorschub von 50 bis 200 mm pro Minute gearbeitet. Schliesslich ist von Vorteil, wenn als Schutzgas Argon oder Argon mit maximal 3% Wasserstoff oder ein Argon-Helium-Gemisch mit 30 bis 70%, vorzugsweise 50%, Argon, Rest Helium, oder Argon-Stickstoff-Wasserstoff verwendet wird. Damit können qualitativ hervorragende Schweissnähte erzeugt werden.

In der Nahtskizze (Fig. 3) ist der Querschnitt durch die zu verbindenden Werkstücke 1, 2 im Bereich der Schweissnaht schematisch dargestellt. Auf der der Schweissung nicht zugänglichen Seite (beispielsweise der Innenseite von Hohlkörpern, wie sie bei geschweissten Rotoren vorkommen) stossen die zu verbindenden Metallteile 1 und 2 an dem Zentrierversatz 7 aneinander und werden zueinander positioniert. Wie bereits beschrieben, ist im Nahtgrundbereich der Entlastungsbereich 8 so ausgebildet, dass beim Schweissen die Solldurchschmelzstelle 9 entsteht, so dass beim Schweissen eine Verschmelzung des Zentrierversatzes 7 zwangsweise erreicht wird. Einbrandkerben treten dann nur beidseitig der Durchschmelzraupe auf, während der tragende Querschnitt keine Einbrandkerben aufweist, was sich sehr günstig auf das Beanspruchungsverhalten des Werkstoffes auswirkt.

Der Zentrierversatz 7 hat in diesem Ausführungsbeispiel eine Höhe h von 5 mm, der Entlastungsbereich 8 eine Breite b von insgesamt 40 mm und eine Höhe c von mindestens 12 mm. Aufgrund dieser geometrischen Abmessungen wird mit eng tolerierten Schweissdatenbereichen die Verschmelzung des Zentrierversatzes 7 erreicht. Die Verbindung der parallelen Werkstückflanken 5, 6 im Engspalt 4 mit einer Breite a von in diesem Ausführungsbeispiel 9,4 mm und einer Höhe c von ca. 12 bis zu 400 mm erfolgt durch vollautomatisches WIG-Schweissen. Die Schweissraupen 10 reichen dabei von der einen Werkstückflanke 5 zur gegenüberliegenden Werkstückflanke 6 und schmelzen daher jeweils beide Werkstückflanken auf. Wenn der Lichtbogen einmal in Position gebracht worden ist, ist keine Veränderung mehr nötig, so dass der Schweissvorgang automatisch ablaufen kann. Bei dieser WIG-Schweissung wird - wie bereits weiter oben erwähnt - ein Schweissdraht mit einem Durchmesser von 0,8 bis 1,2 mm verwendet. In Abhängigkeit von der Vorwärmtemperatur wird mit Stromstärken im Bereich von 140 bis 300 A bei einem Vorschub von 50 bis 200 mm pro Minute gearbeitet. Als Inertgas wird Argon verwendet. Selbstverständlich können in anderen Ausführungsbeispielen auch ein Gemisch aus Argon und maximal 3% Wasserstoff oder ein Gemisch aus Argon und 30 bis 70% Helium verwendet werden, wobei optimale Ergebnisse bei Verwendung von gleichen Anteilen an Argon und Helium erzielt werden.

Das erfindungsgemässe Verfahren lässt sich sowohl auf rotationssymmetrische Körper als auch auf andere dickwandige Metallteile anwenden, insbesondere auf solche, die nur von einer Seite aus zugänglich sind und wurzelseitig nicht nachgeschweisst werden können, beispielsweise Platten, Rohre, Scheiben und Hohlzylinder aus niedrig- bzw. hochlegierten metallischen Werkstoffen. Das WIG-Schweissen kann mit Unterpulverschweissen (Submerged Arc Welding SAW) kombiniert werden, indem zuerst WIG geschweisst wird und dann die restliche Naht mit SAW aufgefüllt wird. Im SAW Bereich ist die Naht zu verbreitern. Das Verfahren beinhaltet eine komplette WIG Schweissung.

Ein bevorzugtes Anwendungsgebiet stellt die Fertigung von Rotoren Energie umwandelnder Maschinen dar, die aus einzelnen Rotationskörpern mit Hohlräumen oder stirnseitigen Eindrehungen zusammengesetzt sind, beispielsweise aus scheiben- oder hohlzylinderförmigen Schmiedestücken gleicher Festigkeit oder gleicher Dicke. Diese Schmiedestücke werden zuerst im 'Wurzelbereich", d.h. im Bereich des Zentrierversatzes 7, vertikal mit Hilfe des oben beschriebenen WIG-Schweissverfahrens verbunden. Damit sich dabei der Rotor nicht verbiegt, muss eine bestimmte Tiefe der ersten Naht vorhanden sein. Diese Höhe liegt dabei vorzugsweise im Bereich des Zweifachen seiner Breite a und beträgt mindestens 12 mm.

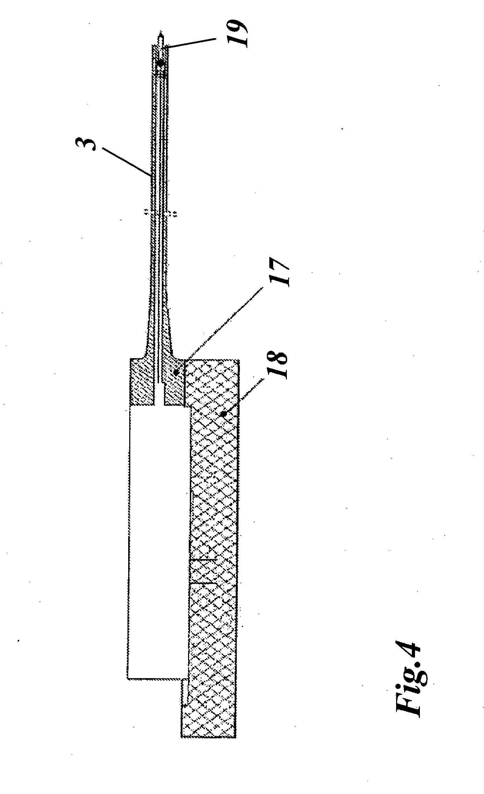

Das beschriebene Verfahren wird mit einem Engspaltbrenner mit automatischer Positionierung, Überwachung aller Schweissparameter und integrierter doppelter Videoüberwachung der Schweissung durchgeführt. Fig. 4 zeigt von der Seite her gesehen ein entsprechendes, auf einer Supportplatte 18 montiertes Brennerschwert 17 mit einer flachen, dünnen Schwertspitze 3, mit der das Brennerschwert 17 in den Engspalt 4 eingeführt werden kann (siehe Fig. 3a).

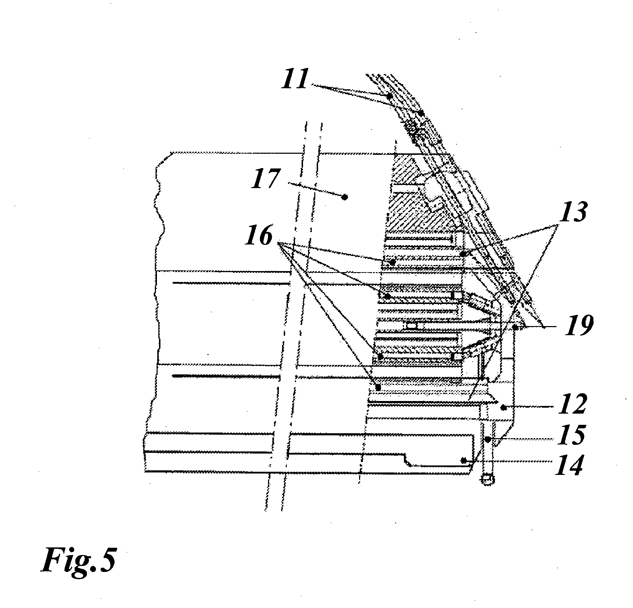

Der Brennerkopf bzw. die Schwertspitze 3 des Brennerschwertes 17 ist in Fig. 5 in der Draufsicht gezeigt. In den Brennerkopf integriert sind mit Abstand zwei Videosysteme 13. Die Wolframelektrode 19 ist zwischen den beiden Videosystemen 13 positioniert. Die Schweissdrahtzufuhr ist mittels eines Drahtführungssystems 11 in den Brennerkopf integriert und automatisiert. Dies ermöglicht die Überwachung von Lichtbogen, Wolframelektrode 19, Schmelzbad, Schweissdrahtzufuhr und Flankenbenetzung. Der Brennerkopf hat eine keramische Flachdüse 12 für die Schutzgaszufuhr mit spezieller Schutzgasverteilung. Auch die oben erwähnte integrierte doppelte Videoüberwachung mit den Videosystemen 13 ist in der keramischen Flachdüse 12 untergebracht. Die Flachdüse 12 ist optimiert für einen minimalen Schutzgasverbrauch. Mit einer Flachdüse 12 wie ausgeführt ist ein Schutzgasverbrauch von ca. 8 I/min ausreichend, verglichen zu einem typischen Schutzgasverbrauch von 50 bis 60 I/min eines Standardbrenners beim Schweissen von Rotoren.

Der Brenner ist voll integriert mit Schweissdrahtführung (11), sowie Wasser und Schutzgas zur Brennerkühlung. Eine Schutzgaszuführung 16 führt Schutzgas zum Schweissen zu. Gleichzeitig wird das Schutzgas zur Kühlung der Videosysteme 13 eingesetzt.

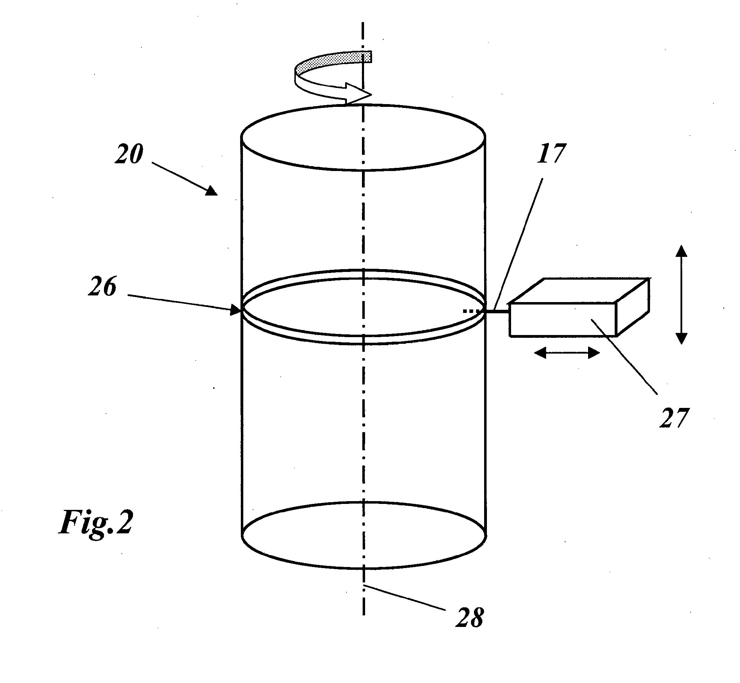

Der beschriebe Brenner ist zur Anwendung in einem automatisierten Schweissprozess vorgesehen. Dazu werden gemäss Fig. 2 die zu verschweissenden Metallteile eines Rotors 20 um eine vertikale Achse 28 drehbar gelagert und ein Brennersystem 27 mit dem Brennerschwert 17 in den Engspalt zwischen den Metallteilen eingeführt. Die Brennerpositionierung erfolgt automatisch in vertikaler Richtung (vertikaler Doppelpfeil in Fig. 2) und radialer Richtung (radialer Doppelpfeil in Fig. 2) mittels einer Kombination von einem integrierten kapazitiven Messsystem 14 (für die vertikale Messung) und einem integrierten Laser-Messsysteme 15 (für die radiale Messung).

Das integrierte Videosystem 13 und die volle Automatisierung des Brenners erlauben, dass grosse Dampf- und Gasturbinenrotoren von nur zwei Schweissern in der notwendigen Qualität geschweisst werden können. Es werden dabei zwei bis vier Brenner gleichzeitig eingesetzt. Das integrierte Videosystem 13 ermöglicht ein WIG- bzw. TIG-Engspaltschweissen mit sehr guter Qualität auch bei grossen Schweissnahttiefen. Der Rotor 20 ist beim Schweissen vertikal positioniert und rotiert. Die Brenner sind ortsfest, sind aber vertikal und radial positionierbar und nachführbar (Fig. 2). Das Zünden der Brenner erfolgt über ein spezielles Hochfrequenz-Zündsystem, das so ausgebildet ist, dass es zu keinem negativen Einfluss auf Nahtqualität oder Prozessautomatisierung kommt. Die Lichtbogenlänge beim Schweissen wird durch ein AVC-System (Strom-Spannungs-Regelungs-System) im Brennersystem 27 automatisch konstant gehalten.

### BEZUGSZEICHENLISTE

- 1,2: Metallteil
- 3: Schwertspitze (Brennerschwert)
- 4: Engspalt
- 5,6: Flanke (Werkstück)
- 7: Zentrierversatz
- 8: Entlastungsbereich
- 9: Solldurchschmelzstelle
- 10: Schweissraupe
- 11: Drahtführungssystem
- 12: keramische Flachdüse
- 13: integriertes Videosystem
- 14: integriertes kapazitives Messsystem
- 15: integriertes Laser-Messsystem
- 16: Schutzgaszuführung
- 17: Brennerschwert (mit integrierter Wasserkühlung)
- 18: Supportplatte
- 19: Wolframelektrode
- 20: Rotor
- 21,..25: Rotorscheibe
- 26: Schweissnaht
- 27: Brennersystem
- 28: Achse
- a: Breite (Engspalt)
- b: Breite (Entlastungsbereich)
- c: Höhe (Entlastungsbereich)
- h: Höhe (Zentrierversatz)

## Patentansprüche

1. Verfahren zum Verbinden zweier, insbesondere rotationssymmetrischer, Metallteile (1, 2), mittels eines Wolfram-Inert-Gas(WIG)-Schweissverfahrens, bei welchem Verfahren die beiden zu verbindenden Metallteile (1, 2) in einem ersten Schritt zunächst mittels eines Zentrierversatzes (7) derart zueinander positioniert werden, dass sich zwischen ihnen ein Engspalt (4) ausbildet und im Nahtgrundbereich ein Entlastungsbereich (8) entsteht, und in einem zweiten Schritt unter Ausbildung einer Solldurchschmelzstelle (9) die den Engspalt (4) begrenzenden Flanken (5, 6) der Metallteile (1, 2) durch den Engspalt (4) füllende Schweissraupen (10) miteinander verbunden werden, **dadurch gekennzeichnet, dass** der Engspalt (4) eine durchgehend konstante Breite (a) aufweist, dass die Breite (a) des Engspaltes (4) so gewählt ist, dass sich die übereinander liegenden Schweissraupen (10) jeweils über die gesamte Breite (a) des Engspaltes (4) erstrecken, und dass der ganze Engspalt (4) durch ein automatisch positionierbares und arbeitendes, als Engspaltbrenner ausgebildetes und eine keramische Flachdüse (12) für die Schutzgaszufuhr aufweisendes Brennerschwert (17) für das WIG-Schweissverfahren mit einem integrierten Videosystem (13) zur Videoüberwachung der Schweissung vollautomatisch mit den Schwelssraupen (10) aufgefüllt wird, wobei das Videosystem in der keramischen Flachdüse (12) untergebracht ist und zwei Videoeinheiten zur optischen Überwachung der Wolframelektrode, des Lichtbogens, des Schmelzbades, der Schweissdrahtzufuhr und der Flankenbenetzung aufweist und wobei das Schutzgas des WIG-Schweissverfahren gleichzeitig zur Kühlung des Videosystems (13) dient.

2. Verfahren nach Anspruch 1, **dadurch gekennzeichnet, dass** ein Engspalt (4) mit einer Breite (a) verwendet wird, die kleiner als 10 mm ist und insbesondere 9,4 mm beträgt.

3. Verfahren nach Anspruch 1 oder 2, **dadurch gekennzeichnet, dass** der Entlastungsbereich (8) eine Breite (b) und eine Höhe (h) aufweist, und dass die Breite (b) des Entlastungsbereiches (8) ungefähr das 3-fache seiner Höhe (h) beträgt.

4. Verfahren einem der Ansprüche 1 bis 3, **dadurch gekennzeichnet, dass** der Engspalt (4) eine Höhe aufweist, die das 2-fache seiner Breite (a), mindestens jedoch 12 mm, beträgt.

5. Verfahren nach einem der Ansprüche 1 bis 4, **dadurch gekennzeichnet, dass** für das WIG-Schweissverfahren ein Schweissdraht verwendet wird, dessen Durchmesser zwischen einem Zehntel und einem Fünftel der Breite (a) des Engspaltes (4) beträgt, mindestens jedoch 0,8 mm und höchstens 1,2 mm, sofern die zu verbindenden Metallteile (1, 2) aus einem typischen Rotorstahl bestehen.

6. Verfahren nach einem der Ansprüche 1 bis 5, **dadurch gekennzeichnet, dass** die Metallteile (1, 2) für das WIG-Schweissverfahren auf erhöhte Temperaturen, vorzugsweise oberhalb 200°C, vorgewärmt werden, und dass beim Schweissen in Abhängigkeit von der Vorwärmtemperatur mit Stromstärken im Bereich von 140 A bis 300 A bei einem Vorschub von 50 mm bis 200 mm pro Minute gearbeitet wird.

7. Verfahren nach einem der Ansprüche 1 bis 6, **dadurch gekennzeichnet, dass** beim WIG-Schweissverfahren als Schutzgas Argon oder Argon mit maximal 3% Wasserstoff oder ein Argon-Helium-Gemisch mit 30-70%, vorzugsweise 50%, Argon, Rest Helium, oder eine Argon-Stickstoff-Wasserstoff-Gemisch, verwendet wird.

8. Verfahren nach einem der Ansprüche 1 bis 7, **dadurch gekennzeichnet, dass** die zu verbindenden Metallteile (1, 2) rotationssymmetrisch sind, dass die Metallteile (1, 2) während des Schweissens übereinander angeordnet und um eine vertikale Achse (28) gedreht werden, und dass zum Schweissen ein Brennerschwert (17) verwendet wird, welches in radialer und in vertikaler Richtung verfahrbar ausgebildet ist.

9. Vorrichtung zur Durchführung des Verfahrens nach einem der Ansprüche 1 bis 8, mit einem automatisch positionierbaren und arbeitenden, als Engspaltbrenner ausgebildeten Brennerschwert (17) für das WIG-Schweissverfahren mit einem integrierten Videosystem (13) zur Videoüberwachung der Schweissung, **dadurch gekennzeichnet, dass** das Brennerschwert (17) eine keramische Flachdüse (12) für die Schutzgaszufuhr aufweist, und das Videosystem (13) derart in der keramischen Flachdüse (12) untergebracht ist, dass das Schutzgas gleichzeitig zur Kühlung des Videosystems (13) dient und das integrierte Videosystem (13) zwei Videoeinheiten umfasst, zwischen denen die Wolframelektrode (19) derart angeordnet ist, dass mit dem Videosystem die Wolframelektrode, der Lichtbogen, das Schmelzbad, die Schweissdrahtzufuhr und die Flankenbenetzung optisch überwacht werden kann.

10. Vorrichtung nach Anspruch 9, **dadurch gekennzeichnet, dass** zur automatischen Schweissdrahtzufuhr ein Drahtführungssystem (11) in das Brennerschwert (17) integriert ist.

11. Vorrichtung nach Anspruch 10, **dadurch gekennzeichnet, dass** die keramische Flachdüse (12) für einen minimalen Schutzgasverbrauch von etwa 8 l/min optimiert ist.

12. Vorrichtung nach einem der Ansprüche 9 bis 11, **dadurch gekennzeichnet, dass** im Brennerschwert (17) Mittel (14, 15) zur Bestimmung der Position des Brennerschwertes (17) im Engspalt (4) angeordnet sind.

13. Vorrichtung nach Anspruch 12, **dadurch gekennzeichnet, dass** die Mittel zur Bestimmung der Position des Brennerschwertes (17) ein integriertes kapazitives und/oder Laser-Messsystem (14 bzw. 15) umfassen.

14. Vorrichtung nach einem der Ansprüche 9 bis 13, **dadurch gekennzeichnet, dass** die zu verbindenden Metallteile (1, 2) um eine vertikale Achse (28) drehbar sind, und dass das Brennerschwert (17) in vertikaler und in radialer Richtung automatisch verfahrbar ist.

## Claims

1. Method for joining two, in particular rotationally symmetrical, metal parts (1, 2) by means of a tungsten inert gas (TIG) welding process, in which method, in a first step, the two metal parts (1, 2) to be joined are initially positioned relative to one another by means of a centering offset (7) in such a way that a narrow gap (4) is formed between them and a relief region (8) is created in the seam-bottom area, and, in a second step, the flanks (5, 6) of the metal parts (1, 2), which delimit the narrow gap (4), are joined together by welding beads (10) which fill the narrow gap (4), with a predetermined melt-through point (9) being formed, **characterized in that** the narrow gap (4) has a continuously constant width (a), **in that** the width (a) of the narrow gap (4) is selected such that the welding beads (10) lying one above the other each extend over the entire width (a) of the narrow gap (4), and **in that** the entire narrow gap (4) is filled with the welding beads (10) in fully automatic fashion by a welding tongue (17) which can be positioned and operates automatically, is in the form of a narrow-gap welding torch, has a ceramic flat nozzle (12) for the supply of inert gases, is intended for the TIG welding process and has an integrated video system (13) for monitoring the welding by video, the video system being accommodated in the ceramic flat nozzle (12) and having two video units for visual monitoring of the tungsten electrode, of the arc, of the molten bath, of the welding wire supply and of the flank wetting, and the inert gas of the TIG welding process simultaneously being used for cooling the video system (13).

2. Method according to Claim 1, **characterized in that** use is made of a narrow gap (4) having a width (a) which is less than 10 mm and, in particular, is 9.4 mm.

3. Method according to Claim 1 or 2, **characterized in that** the relief region (8) has a width (b) and a height (h), and **in that** the width (b) of the relief region (8) is about 3 times its height (h).

4. Method according to one of Claims 1 to 3, **characterized in that** the height of the narrow gap (4) is 2 times its width (a), but is at least 12 mm.

5. Method according to one of Claims 1 to 4, **characterized in that**, for the TIG welding process, use is made of a welding wire, the diameter of which is between one-tenth and one-fifth of the width (a) of the narrow gap (4), but is at least 0.8 mm and at most 1.2 mm, if the metal parts (1, 2) to be joined consist of a typical rotor steel.

6. Method according to one of Claims 1 to 5, **characterized in that**, for the TIG welding process, the metal parts (1, 2) are preheated to elevated temperatures, preferably above 200°C, and **in that**, during welding, work is carried out with current intensities in the range of 140 A to 300 A at a feed rate of 50 mm to 200 mm per minute, depending on the preheating temperature.

7. Method according to one of Claims 1 to 6, **characterized in that** the inert gas used during the TIG welding process is argon or argon with at most 3% hydrogen or an argon/helium mixture having 30-70%, preferably 50%, argon, remainder helium, or an argon/nitrogen/hydrogen mixture.

8. Method according to one of Claims 1 to 7, **characterized in that** the metal parts (1, 2) to be joined are rotationally symmetrical, **in that** the metal parts (1, 2) are arranged one above the other during welding and are rotated about a vertical axis (28), and **in that** the welding is carried out using a welding tongue (17) which is designed to be moveable in the radial and vertical directions.

9. Device for carrying out the method according to one of Claims 1 to 8, having a welding tongue (17) which can be positioned and operates automatically, is in the form of a narrow-gap welding torch, is intended for the TIG welding process and has an integrated video system (13) for monitoring the welding by video, **characterized in that** the welding tongue (17) has a ceramic flat nozzle (12) for the supply of inert gas, and the video system (13) is accommodated in the ceramic flat nozzle (12) in such a way that the inert gas is simultaneously used for cooling the video system (13) and the integrated video system (13) comprises two video units, the tungsten electrode (19) being arranged therebetween in such a manner that the video system can be used to visually monitor the tungsten electrode, the arc, the molten bath, the welding wire supply and the flank wetting.

10. Device according to Claim 9, **characterized in that** welding wire is supplied automatically by integrating a wire-guiding system (11) in the welding tongue (17).

11. Device according to Claim 10, **characterized in that** the ceramic flat nozzle (12) is optimized for a minimum inert gas consumption of about 8 1/min.

12. Device according to one of Claims 9 to 11, **characterized in that** means (14, 15) for determining the position of the welding tongue (17) in the narrow gap (4) are arranged in the welding tongue (17).

13. Device according to Claim 12, **characterized in that** the means for determining the position of the welding tongue (17) comprise an integrated capacitive and/or laser measuring system (14 and 15).

14. Device according to one of Claims 9 to 13, **characterized in that** the metal parts (1, 2) to be joined can be rotated about a vertical axis (28), and **in that** the welding tongue (17) can be moved automatically in the vertical and radial directions.

## Revendications

1. Procédé pour relier deux pièces métalliques (1, 2), en particulier à symétrie de rotation, au moyen d'un procédé de soudage au tungstène et gaz inerte (TIG), dans lequel les deux pièces métalliques (1, 2) à relier sont d'abord positionnées l'une par rapport à l'autre dans une première étape au moyen d'un dispositif de centrage (7) de manière à former entre elles un étroit interstice (4) et une zone de délestage (8) au niveau du fond de la rainure,
les flancs (5, 6) des pièces métalliques (1, 2) qui délimitent l'étroit interstice (4) étant ensuite reliés l'un à l'autre dans une deuxième étape par un cordon de soudure (10) qui remplit l'étroit interstice (4) en formant un emplacement (9) de fusion de consigne,
**caractérisé en ce que**
l'étroit interstice (4) présente partout une largeur constante (a),
**en ce que** la largeur (a) de l'étroit interstice (4) est sélectionnée de telle sorte que chacun des cordons de soudure (10) disposés l'un au-dessus de l'autre s'étende sur toute la largeur (a) de l'étroit interstice (4) et
**en ce que** l'étroit interstice (4) est rempli de manière entièrement automatiquement par le cordon de soudure (10) par une torche (17) de soudage TIG qui peut être positionnée et travailler de manière automatique, configurée comme torche pour interstice étroit et présentant une tuyère aplatie (12) en céramique pour l'apport de gaz de protection, la torche présentant un système vidéo (13) intégré permettant la surveillance vidéo du soudage,
**en ce que** le système vidéo est placé dans la tuyère aplatie (12) en céramique et présente deux unités vidéo qui surveillent optiquement l'électrode de tungstène, l'arc lumineux, le bain de fusion, l'apport de fil de soudure et le mouillage des flancs et
**en ce que** le gaz de protection du procédé de soudage TIG sert en même temps à refroidir le système vidéo (13).

2. Procédé selon la revendication 1, **caractérisé en ce qu'**il utilise un interstice étroit (4) dont la largeur (a) est inférieure à 10 mm et en particulier est de 9,4 mm.

3. Procédé selon les revendications 1 ou 2, **caractérisé en ce que** la zone de délestage (8) présente une largeur (b) et une hauteur (h) et **en ce que** la largeur (b) de la zone de délestage (8) représente environ le triple de sa hauteur (h).

4. Procédé selon l'une des revendications 1 à 3, **caractérisé en ce que** la hauteur de l'étroit interstice (4) représente deux fois sa largeur (a) mais est d'au moins 12 mm.

5. Procédé selon l'une des revendications 1 à 4, **caractérisé en ce que** lorsque les pièces métalliques (1, 2) à relier soient constituées d'un acier typique pour rotor, le procédé de soudage TIG utilise un fil de soudure dont le diamètre représente entre le dixième et le cinquième de la largeur (a) de l'étroit interstice (4) mais est d'au moins 0,8 mm et d'au plus 1,2 mm.

6. Procédé selon l'une des revendications 1 à 5, **caractérisé en ce que** pour l'opération de soudage TIG, les pièces métalliques (1, 2) sont préchauffées à haute température, de préférence à plus de 200°C, et **en ce que** lors du soudage, on travaille en fonction de la température de préchauffage à une intensité de courant de l'ordre de 140 A à 300 A pour une avance de 50 mm à 200 mm par minute.

7. Procédé selon l'une des revendications 1 à 6, **caractérisé en ce que** l'opération de soudage TIG utilise comme gaz de protection l'argon ou de l'argon contenant au plus 3 % d'hydrogène, avec un mélange d'argon et d'hélium à 30-70 %, de préférence à 50 % d'argon, le reste étant l'hélium, ou avec un mélange d'argon, d'azote et d'hydrogène.

8. Procédé selon l'une des revendications 1 à 7, **caractérisé en ce que** les pièces métalliques (1, 2) à relier sont symétriques en rotation, **en ce que** pendant le soudage, les pièces métalliques (1, 2) sont disposées l'une au-dessus de l'autre et sont tournées autour d'un axe vertical (28) et **en ce que** pour le soudage, on utilise une torche (17) qui peut être déplacée dans la direction radiale et dans la direction verticale.

9. Dispositif en vue de l'exécution du procédé selon l'une des revendications 1 à 8, présentant pour l'opération de soudage TIG une torche (17) apte à être positionnée et travaillant automatiquement, configurée comme torche pour interstice étroit et présentant un système vidéo (13) intégré pour la surveillance vidéo du soudage,
**caractérisé en ce que**
la torche (17) présente une tuyère aplatie (12) en céramique pour l'apport de gaz de protection,
**en ce que** le système vidéo (13) est placé dans la tuyère aplatie (12) en céramique de telle sorte que le gaz de protection serve en même temps à refroidir le système vidéo (13) et
**en ce que** le système vidéo (13) intégré comporte deux unités vidéo entre lesquelles l'électrode (19) en tungstène est disposée de telle sorte que le système vidéo puisse surveiller optiquement l'électrode de tungstène, l'arc lumineux, le bain de fusion, l'apport de fil de soudure et le mouillage des flancs.

10. Dispositif selon la revendication 9, **caractérisé en ce qu'**un système (11) d'amenée de fil qui amène automatiquement le fil de soudure est intégré dans la torche (17).

11. Dispositif selon la revendication 10, **caractérisé en ce que** la tuyère aplatie (12) en céramique est optimisée pour une consommation minimale en gaz de protection d'environ 8 l/min.

12. Dispositif selon l'une des revendications 9 à 11, **caractérisé en ce que** des moyens (14, 15) qui déterminent la position de la torche (17) dans l'étroit interstice (4) sont disposés dans la torche (17).

13. Dispositif selon la revendication 12, **caractérisé en ce que** les moyens de détermination de la position de la torche (17) comprennent un système de mesure capacitif et/ou laser (14 ou 15) intégré.

14. Dispositif selon l'une des revendications 9 à 13, **caractérisé en ce que** les pièces métalliques (1, 2) à relier peuvent tourner autour d'un axe vertical (28) et **en ce que** la torche (17) peut être déplacée automatiquement dans la direction verticale et dans la direction radiale.
